**Europäisches Patentamt**

**European Patent Office**

**Office européen des brevets**

(19)

(11) Veröffentlichungsnummer: **0 049 303**
**B1**

(12) ## EUROPÄISCHE PATENTSCHRIFT

(45) Veröffentlichungstag der Patentschrift:
**29.01.86**

(51) Int. Cl.⁴: **G 01 M 17/04**

(21) Anmeldenummer: **80106088.0**

(22) Anmeldetag: **07.10.80**

(54) **Verfahren und Einrichtung zur Qualifizierung der Stossdämpfer von mit elastischen Reifen versehenen gefederten Fahrzeugen, vorzugsweise Strassenkraftfahrzeugen.**

(43) Veröffentlichungstag der Anmeldung:
**14.04.82 Patentblatt 82/15**

(45) Bekanntmachung des Hinweises auf die Patenterteilung:
**29.01.86 Patentblatt 86/5**

(84) Benannte Vertragsstaaten:
**AT CH DE FR GB LI NL**

(56) Entgegenhaltungen:
**DE - B - 2 445 406**
**FR - A - 2 144 057**
**FR - A - 2 394 077**
**US - A - 3 855 841**
**US - A - 3 877 288**
**US - A - 4 002 051**

**A.T.Z., Jahrgang 65, Heft 7, Juli 1963, Stuttgart, DE, M. MITSCHKE, "Theoretische und experimentelle Schwingungsuntersuchungen am Kraftfahrzeug", Selten 197 bis 205**

(73) Patentinhaber: **Közlekedéstudományi Intézet, Thán Károly u. 3/5, Budapest 1119 (HU)**

(72) Erfinder: **Tamási, Attila, Dipl.-Ing., Gulyás u. 16, HU-1112 Budapest (HU)**
Erfinder: **Faragó, László, Dipl.-Ing., Bója u. 24, HU-1182 Budapest (HU)**
Erfinder: **Kardos, Mihály, Dipl.-Ing., Hosszu u. 25, HU-1203 Budapest (HU)**

(74) Vertreter: **Eitle, Werner, Dipl.-Ing. et al, Hoffmann, Eitle & Partner Patentanwälte Arabellastrasse 4, D-8000 München 81 (DE)**

**Beschreibung**

Die Erfindung betrifft ein Verfahren sowie eine Vorrichtung zum Qualifizieren von Stossdämpfern an mit elastischen Reifen versehenen, gefederten Fahrzeugen, vorzugsweise Strassenkraftfahrzeugen, bei dem in einem ersten Schritt das Rad des Fahrzeuges durch Sinus-Schwingungen von konstanter Amplitude erregt und auf eine über der Eigenfrequenz des Fahrwerkes gelegene Frequenz beschleunigt wird, und bei dem in einem zweiten Schritt die Erregerfrequenz vermindert wird.

Bekanntlich dienen Stossdämpfer bei gefederten Fahrzeugen dazu, die von den Unebenheiten der Fahrbahn herrührenden Schwingungen der gefederten Karosserie zu dämpfen. Andererseits dienen sie dazu, die stossweise auftretenden Federschwingungen zu beseitigen oder aber entsprechend zu dämpfen. Auf der anderen Seite haben die Stossdämpfer die Aufgabe, den Sohlenkontakt zwischen den Rädern des Fahrzeuges und der Fahrbahn bestmöglich zu sichern. Die Sohlenkraft des Fahrzeugrades ändert sich ständig in Abhängigkeit von den Unregelmässigkeiten der Fahrbahn sowie aufgrund anderer erregender Einwirkung. So werden die Belastungsänderungen des Fahrzeugrades durch die Beschaffenheit der Stossdämpfer entscheidend beeinflusst.

Die Qualifizierung von Stossdämpfern im eingebauten Zustand ist daher aus verkehrssicherheitlichen Gründen ausserordentlich wichtig.

Aus der US-A-4 002 051 ist ein Verfahren zur Bestimmung des Stossdämpferverhaltens eines Kraftfahrzeuges bekannt. Die Vorrichtung zur Durchführung dieses bekannten Verfahrens umfasst eine lastempfindliche Wandlereinrichtung, die zur Aufnahme mindestens eines Kraftfahrzeugrades dient und in der als Ausgangsgrösse ein entsprechendes gewichtsabhängiges Signal erzeugt wird. Dieser lastabhängige Wandler ist über einen Umschalter einerseits mit einer statischen Belastungsmessvorrichtung und andererseits mit einer Maximum-Minimum-Belastungsmessvorrichtung verbindbar. Beide Messvorrichtungen sind mit einer Teilereinrichtung verbunden, die ausgangsseitig zu einer Anzeige führt. In dieser Teilereinrichtung wird entweder der Verhältniswert aus der minimalen Rad-Sohlenkraft zur statisch gemessenen Rad-Sohlenkraft oder aber der Maximalwert der Rad-Sohlenkraft zur statisch gemessenen Rad-Sohlenkraft berechnet.

Der minimale Rad-Sohlenkraftwert bzw. der maximale Rad-Sohlenkraftwert wird dadurch ermittelt, dass der Lastwandler mit dem auf ihm befindlichen Kraftfahrzeugrad in Schwingung versetzt wird bis zu einer Frequenz, die oberhalb der Resonanzfrequenz des Federmassesystems der Radaufhängung liegt. Danach wird der Schwingungsmotor ausgeschaltet, so dass die Erregerfrequenz langsam abnimmt. Hierbei wird die Resonanzfrequenz des Federmassesystems durchlaufen. Bei Resonanzfrequenz ist die Rad-Sohlenkraft am geringsten. Dies bedeutet, dass die Amplitude der dynamischen Rad-Sohlenkraft (Schwingungsamplitude) am grössten ist.

Bei diesem bekannten Verfahren erfolgt die Ermittlung der statischen Belastung bzw. statischen Sohlenkraft bei stillstehendem Rad ohne jede Fremderregung. Die Ermittlung der minimalen oder maximalen Rad-Sohlenkraft im Eigenfrequenzpunkt erfolgt von der Nullinie aus.

Nachteilig ist es bei dem bekannten Verfahren, dass bei jedem Messvorgang mittels eines Umschalters aus einer ersten Messschleife, in der die statische Last des Fahrzeuges gemessen wird, in eine zweite Schleife umgeschaltet wird, in der die dynamische Messung entweder der minimalen Rad-Sohlenkraft oder der maximalen Rad-Sohlenkraft erfolgt. Durch dieses Hin- und Herschalten ergeben sich beim Messen und Ermitteln des Verhältniswertes zwischen minimaler bzw. maximaler Rad-Sohlenkraft und statischer Rad-Sohlenkraft Nachteile.

Die Heranziehung der statischen Rad-Sohlenkraft bzw. Lastermittlung weist den Nachteil auf, dass aufgrund der Reibungs- bzw. Dämpfungswirkung sämtlicher beteiligten Dämpfungselemente (Stossdämpfer) sowie der übrigen beweglichen im Fahrwerk vorhandenen Teile keine exakte und daher wiederholbare Messung der statischen Rad-Sohlenkraft erfolgen kann. Die einzelnen ermittelten statischen Rad-Sohlenkräfte eines Rades können merkliche Abweichungen vom richtigen Wert aufweisen (bis zu 10, maximal bis zu 15%).

Daher ist das in der US-A-4 002 051 beschriebene Verfahren und die zur Durchführung des Verfahrens vorgesehene Vorrichtung nicht geeignet, die tatsächlich auf der Strasse vorkommenden Verhältnisse quasi real nachzubilden.

Aus der Zeitschrift ATZ, Jahrgang 65, Heft 7, Juli 1963, Seiten 197 bis 202 ist unter dem Abschnitt «Fahrsicherheit» des Aufsatzes «theoretische und experimentelle Schwingungsuntersuchungen am Kraftfahrzeug» allgemein dargelegt, dass die gesamte Rad-Sohlenkraft sich aus einem statischen Rad-Sohlenkraftanteil und aus einem von den Unebenheiten der Fahrbahn herrührenden dynamischen Rad-Sohlenkraftanteil zusammensetzt. Des weiteren sind während des Fahrbetriebes gemachte Messungen dargestellt und beschrieben. Als Beurteilungskenngrösse ist wie bei der US-A-4 002 051 der Verhältniswert aus dem dynamischen Rad-Sohlenkraftwert und dem statischen Rad-Sohlenkraftwert angegeben. Zur Auswertung der gesamten Rad-Lastschwankungen wird vorgeschlagen, die Häufigkeit der Spitzenwerte, die zwischen zwei parallelen Rad-Lastwerten liegen, zu wählen. Zur dynamischen Ermittlung von Federkräften werden komplizierte Verfahren und Berechnungen vorgeschlagen. Diesem Artikel ist kein für den normalen Gebrauch geeignetes praktikables Verfahren zur Qualifizierung von Stossdämpfern entnehmbar.

Es ist daher Aufgabe der Erfindung, ein Verfahren zum Qualifizieren von Stossdämpfern an mit elastischen Reifen versehenen, gefederten Fahrzeugen, vorzugsweise Strassenkraftfahrzeugen sowie eine Vorrichtung zur Durchführung des Verfahrens zu schaffen, bei der unter Vermeidung und Beseitigung der obengenannten Nachteile die Qualifizierung der Stossdämpfer in verkehrssicherheitlicher Hinsicht vollkommener erfolgt als bei den bekannten Geräten.

Die Aufgabe wird erfindungsgemäss dadurch gelöst, dass die Änderungen der Rad-Sohlenkraft während des ersten Schritts gemessen werden und daraus ein Mittelwert elektrisch gebildet wird, und dass während des zweiten Schritts im Eigenfrequenzpunkt des Fahrwerkes die minimale Rad-Sohlenkraft gemessen wird und das Verhältnis dieses minimalen Wertes der Rad-Sohlenkraft mit dem Mittelwert der Rad-Sohlenkraft gebildet wird und der Stossdämpfer anhand dieses Verhältnisses qualifiziert wird.

Hierdurch ergibt sich der Vorteil, dass keine statische Rad-Sohlenkraft-Messung erfolgt, sondern eine Mittelwertbildung bei Erregung des Rades mit beteiligtem Fahrwerk, insbesondere in der Beschleunigungsphase, in der die Erregerfrequenz über der Resonanzfrequenz bzw. Eigenfrequenz des Fahrwerkes hinaus gesteigert wird. Der die Güte des Stossdämpfers charakterisierende Koeffizient wird über diesen Mittelwert der dynamischen Rad-Sohlenkraft gebildet, um auf diese Weise den Stossdämpfer zu qualifizieren. Sowohl bei der Mittelwertbildung als auch bei der Spitzenwertermittlung wird dynamisch gearbeitet. Ein Schwingungsgenerator übt auf das Rad und seine unmittelbar beteiligten Masse-Feder-Dämpfungsteile (Fahrwerk) dynamische Wechselbelastungen aus, die im Lagerpunkt mittels eines Kraftfühlers gemessen und einer Messeinheit zugeführt wird.

Aufgrund der normalerweise vorhandenen Unsymmetrie der Stossdämpferelemente sowie weiterer beteiligter Teile ist der dynamisch gebildete Mittelwert ein anderer verglichen mit dem statischen Rad-Sohlenkraftwert der bekannten Verfahren. Da die Dämpfungskraft der Stossdämpfer beim Expandieren grösser ist als beim Zusammendrücken, ist der dynamisch ermittelte Mittelwert der Rad-Sohlenkraft grösser als der statische Rad-Sohlenkraftwert bei den bekannten Verfahren. Da mittels des erfindungsgemässen Verfahrens der Mittelwert dynamisch gebildet wird, werden die auf der Strasse vorkommenden Verhältnisse quasi real nachgebildet. Man erhält auf diese Weise ein reproduzierbares Ergebnis das bei jeder Messung in der gleichen Grössenordnung liegt.

Auf diese Weise ist ein Verfahren geschaffen worden, mit dessen Hilfe universell bei jedem Kraftfahrzeug- und Stossdämpfertyp direkt verwendbare Messergebnisse geliefert werden. Die Stossdämpfer werden unter wirklichen Strassenverhältnissen qualifiziert. Der Verhältniswert aus minimaler Rad-Sohlenkraft und aus dem dynamisch ermittelten Mittelwert der Rad-Sohlenkraft qualifiziert den Stossdämpfer realer als dies bei den bekannten Verfahren der Fall ist.

Zur Durchführung des Verfahrens wird von einer Vorrichtung ausgegangen mit einer Radstütze und einer mit dieser zusammenwirkenden Schwingeinheit, wobei die Radstütze und die Schwingeinheit über einen zweiarmigen Hebel miteinander in Verbindung stehen.

Diese Vorrichtung ist erfindungsgemäss dadurch gekennzeichnet, dass dem Kippunkt des Hebels ein Kraftfühler zur Messung der Rad-Sohlenkraft zugeordnet ist, der mit einer elektronischen Messeinheit verbunden ist, die eine Einrichtung zur Bildung des Mittelwertes der Rad-Sohlenkraft, eine Einrichtung mit einem Speicherverhalten zur Ermittlung der minimalen Rad-Sohlenkraft und eine Vorrichtung zur Bildung des Verhältnisses aus dem Mittelwert der Rad-Sohlenkraft und dem Minimalwert der Rad-Sohlenkraft aufweist. In einem ersten Messgang wird in einem sogenannten Eichvorgang mit Hilfe dieser Vorrichtung über einen Verstärker sowie über einen Analog-Digital-Wandler eine Anzeige des dynamischen Mittelwertes sowie eine Eichung des Messwerkes auf 100 Einheiten durchgeführt. Hierbei wird die Erregerfrequenz der Schwingeinheit über die Eigenfrequenz des Fahrwerkes hinaus beschleunigt. Nach der vorgenommenen Eichung ist die Messeinheit anzeige- und betriebsbereit zur Ermittlung und Anzeige der minimalen Rad-Sohlenkraft.

Die Erfindung soll nun in ihren Einzelheiten anhand der beigefügten Zeichnung näher erläutert werden. Es zeigt:

Fig. 1: Schematische Darstellung eines Ausführungsbeispiels der Erfindung gemäss der Erfindung;

Fig. 2: Elektrisches Schaltbild der elektronischen Messeinheit;

Fig. 3: Diagramm der Änderungen der Rad-Sohlenkraft.

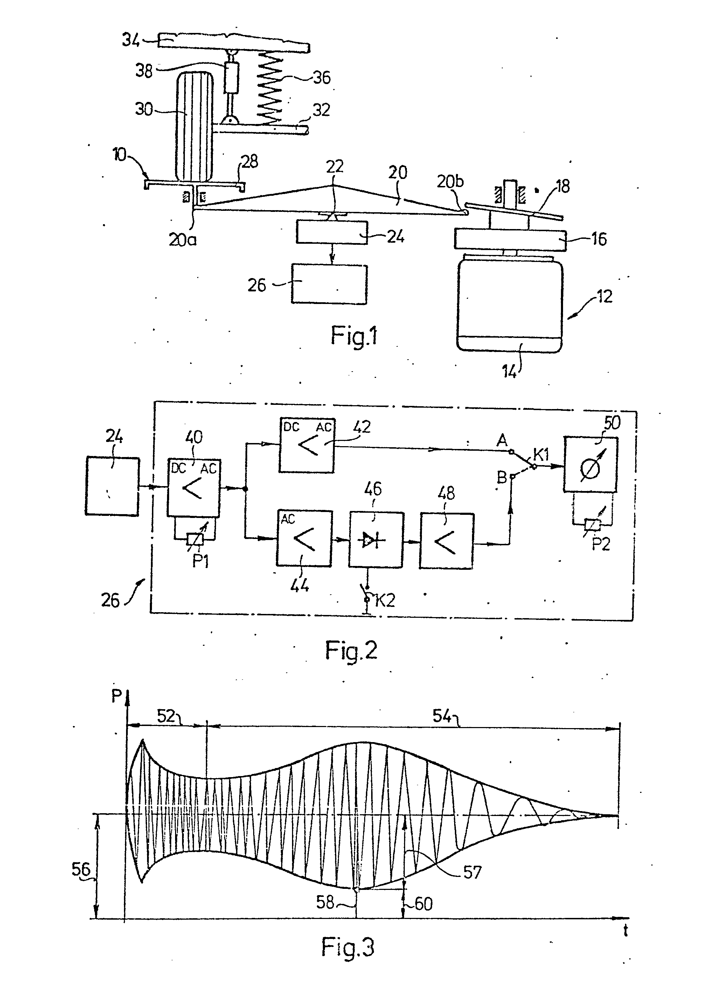

Wie aus Fig. 1 zu ersehen, hat das erfindungsgemässe Stossdämpfer-Qualifiziergerät eine Radstütze 10 und eine damit zusammenarbeitende Schwingeinheit 12. Die Schwingeinheit 12 besteht bei dem dargestellten Ausführungsbeispiel aus einem, durch einen Elektromotor 14 angetriebenen Schwungrad 16 und einer Taumelscheibe 18.

Erfindungsgemäss stehen die Radstütze 10 und die Schwingeinheit 12 über einen zweiarmigen Hebel 20 miteinander in Verbindung. Ein Kippunkt 22 des zweiarmigen Hebels 20 ist dem an sich bekannten Kraftfühler 24 beigegeben. Im vorliegenden Falle erscheint der Kraftfühler 24 wie eine waage-artige Unterstützung im Mittelpunkt des zweiarmigen Hebels 20 und tastet deshalb die Reaktionskräfte ab. Der Kraftfühler 24 steht erfindungsgemäss mit einer elektronischen Messeinheit 26 in Verbindung, die später anhand von Fig. 2 eingehender besprochen werden wird.

Die Radstütze 10 ist im vorliegenden Falle mit einem scheibenartig ausgebildeten Schemel 28 ausgestattet. Der Schemel 28 arbeitet mit einem Ende 20a des zweiarmigen Hebels 20 zusammen und ist in an sich bekannter Weise vertikal aufwärts bzw. abwärts bewegbar, d.h. zu sich parallel verschiebbar angeordnet. Der Schemel 28 muss zur Unterstützung beliebiger Räder 30 entsprechend bemessen sein. Das Rad 30 sitzt in an sich bekannter Weise auf einer Welle 32. Die Welle 32 ist über eine Aufbaufeder 36 und einen Stossdämpfer 38 mit einem Aufbau 34 verbunden.

Das gegenüberliegende Ende 20b des zweiarmigen Hebels 20 arbeitet zusammen mit der Taumelscheibe 18. Die Schwingeinheit 12 wurde hier so gewählt, dass sie imstande ist, Schwingungen mit konstanter Sinusamplitude im erregenden Frequenzbereich von 0–24 Hz zu erzeugen. Im vorliegenden Fall wurde der Erregungshub mit 6 mm gewählt. Die Fahrgestell-Eigenfrequenz sämtlicher zu prüfenden Kraftwagentypen muss in den erregenden Frequenzbereich fallen.

Das elektrische Schaltbild der elektronischen Messeinheit 26 ist in Fig. 2 zu sehen, welche – wie schon oben erwähnt – mit dem Kraftfühler 24 in Verbindung steht. Im vorliegenden Falle wird von dem Kraftfühler 24 die im Kippunkt 22 erweckte Reaktionskraft – in an sich bekannter Weise – in ein elektrisches Signal umgewandelt. Diese Umwandlung geschieht hier so, dass die Kraftänderung in eine Widerstandänderung, dann aber diese in eine Spannungsänderung umgewandelt wird. Die elektronische Messeinheit 26 ist mit einem Vorverstärker 40 versehen, der die Aufgabe hat, das elektrische Signal des Kraftfühlers 24 zu verstärken. Der Vorverstärker 40 hat ein Potentiometer $P_1$, mit welchem der unbelastete Zustand eingestellt werden kann. An den Vorverstärker 40 ist ein Messverstärker 42 angeschlossen, dessen Aufgabe darin besteht, die vom Vorverstärker 40 erhaltenen elektrischen Signale weiter zu verstärken, und in an sich bekannter Weise elektrische Mittelwerte zu bilden. Als sein Ausgangszeichen wurde im vorliegenden Falle 7 Volt gewählt.

Mit dem Messverstärker 42 ist ein zweiter Messverstärker 44 parallel geschaltet. Er hat die Aufgabe, das sich ändernde Spannungssignal zu verstärken, sowie im Messfrequenzbereich die Schwingungsamplitude unabhängig von der Frequenz zu verstärken. Ein wichtiger Gesichtspunkt ist dabei, dass die Messverstärker 42 und 44 im Messfrequenzbereich identische Verstärkung haben sollen.

Der Messverstärker 44 schliesst an einen Spitzengleichrichter 46 an, welcher die Sinus-Ausgangssignale des Messverstärkers 44 in an sich bekannter Weise gleichrichtet. Seine Aufgabe ist ferner, das Maximum der Schwingungsamplitude zu bilden. Vorteilhaft wird der Spitzengleichrichter 46 mit einem Schalter $K_2$ versehen, mit welchem das Ergebnis der vorherigen Messung gelöscht werden kann.

Der Spitzengleichrichter 46 ist an einem Memorial-Verstärker 48 angeschlossen. Dieser hat die vom Spitzengleichrichter 46 erhaltene maximale Schwingungsamplitude eine gewisse Zeit lang, im vorliegenden Fall 30 sec. lang zu speichern. Damit kann nämlich die Ablesung des gemessenen Wertes wesentlich bequemer gestaltet werden.

Der Messverstärker 42 und der Memorial-Verstärker 48 können über einen Schalter $K_1$ mit einem Anzeigegerät 50 verbunden werden, wobei der Messverstärker 42 an den A-Kontakt des Schalters $K_1$, und der Memorialverstärker an den B-Kontakt des Schalters $K_1$ gelegt wird. Das Anzeigegerät 50 ist im vorliegenden Falle ein bekanntes Drehspulen-Messgerät (System «Deprez»). Es hat eine Skala von 100 Teilungen sowie ein Potentiometer $P_2$. Wird dieses mit dem A-Kontakt des Schalters $K_1$ verbunden, so kann das Anzeigegerät auf den grössten Ausschlag eingestellt werden.

In Fig. 3 ist das Diagramm der Sohlenkraft-Änderungen zu sehen, wobei auf der Vertikalachse die Sohlenkraft P, auf der Horizontalachse aber die Messzeiten t aufgetragen wurden. Der Beschleunigungsabschnitt wurde mit 52, der Verzögerungsabschnitt mit 54, der Wert der statischen Sohlenkraft mit 56, der Eigenfrequenzpunkt aber mit der Bezugsnummer 58 bezeichnet.

Die Anwendungs- und Arbeitsweise der in Fig. 1–3 dargestellten Ausführungsbeispiele gemäss der Erfindung ist folgende:

In unbelastetem Zustand der Radstütze 10 wird in der A-Stellung des Schalters $K_1$ das Anzeigegerät 50 mit dem Potentiometer $P_1$ auf Null eingestellt. Danach wird das Rad 30 des Kraftwagens auf die Radstütze 10 gestellt, der Elektromotor 14 der Schwingeinheit 12 eingeschaltet und damit das Schwingungssystem auf 24 Hz beschleunigt. Diesem entspricht in Fig. 3 der mit Bezugsnummer 52 bezeichnete Abschnitt, der bei unseren Versuchen in 2 sec beendet war. Hiernach wird mit dem Potentiometer $P_2$ am Anzeigegerät 50 der Endausschlag – d.h. die Teilung 100 – eingestellt, die dem Mittelwert der Rad-Sohlenkraft entspricht. Nun wird der Schalter $K_1$ mit dem Kontakt B verbunden; der Elektromotor 14 der Schwingeinheit 12 aber ausgeschaltet. Zusammen mit dem allmählichen Sinken der Schwingungsfrequenz kann am Anzeigegerät 50 die Änderung der Sohlenkraft P verfolgt werden. Die Dauer dieses Verzögerungsabschnittes 54 wurde bei unseren Versuchen mit 20 sec. gewählt. Mit dem Messverstärker 44 und dem Spitzengleichrichter 46 wird ein maximaler Änderungswert (Amplitude) der Rad-Sohlenkraft wahrgenommen. Dieser Abschnitt ist im Diagramm mit 57 bezeichnet. Man erhält ihn dann, wenn die sinkende Erregerfrequenz den Eigenfrequenzpunkt 58 des Fahrwerks durchschreitet. Demnach besteht also die Qualifizier-Operation im Wesen darin, dass man aus dem Mittelwert der Rad-Sohlenkraft 56 und aus dem maximalen Änderungswert (Amplitude der Rad-Sohlenkraft 57) eine Verhältniszahl bildet, die wie folgt ausgedrückt werden kann:

$$\frac{\text{Wert } 57}{\text{Wert } 56} \cdot 100$$

Der Differenzwert 56 minus 57 ist demnach der Minimalwert der Rad-Sohlenkraft, welcher in Fig. 3 mit der Bezugsnummer 60 bezeichnet ist.

Bei den Versuchen mit dem beschriebenen Ausführungsbeispiel gemäss der Erfindung wurde, wenn sich diese Verhältniszahl zwischen 0 und 50%, vorteilhaft mit 20–50% ergab, von uns der geprüfte Stossdämpfer 38 in verkehrssicherheitlicher Hinsicht als entsprechend beurteilt. Erreicht jedoch dieser Wert 70%, so muss der Stossdämpfer 38 unbedingt ausgetauscht werden.

Wie aus obigem hervorgeht, wird die Messung in der allerunvorteilhaftesten Lage des Stossdämpfers 38, d.h. bei seiner maximalen Beanspruchung durchgeführt. Die Zuverlässigkeit der Qualifizierung wird dadurch garantiert, dass der untersuchte Parameter, d.h. das Ausmass der Schwankungen der Radsohlenkraft, direkt der bestimmende Faktor dafür ist, ob der Schwingungsdämpfer in verkehrssicherheitlicher Hinsicht entspricht. Es ist zweckmässig, die Einrichtung so auszugestalten, dass sie nur geringe angeschlossene Massen besitzt. In diesem Sinne wurde die Masse der Radstütze 10 möglichst klein gewählt. Durch die Anordnung aber, wonach der Kraftfühler 24 als Reaktionskraft-Fühler mit verschiebungsfreier Abstützung ausgestaltet wurde, ist das Verarbeiten und numerische Angaben der abgetasteten Reaktionskraft auf einfache Weise möglich.

Die elektronische Messeinheit 26 kann selbstredend auch durch eine beliebig andere, entsprechende Messeinheit ersetzt werden.

Die Verwendung der erfindungsgemässen Einrichtung erfordert seitens des Bedienungspersonals keine besonderen Sachkenntnisse und nicht die Kenntnis der Daten der verschiedenen Kraftfahrzeug- und Stossdämpfertypen. Die mit der Lösung gemäss der Erfindung gebildete Verhältniszahl ermöglicht somit auch bei einem gemischten Fahrzeugpark die einfache und schnelle Qualifizierung und Beurteilung der Stossdämpfer.

Es empfiehlt sich die Einrichtung gemäss der Erfindung zweiseitig auszugestalten, wobei zwei Einrichtungen in Radstandbreite nebeneinander angeordnet erscheinen. Dabei kann vorteilhaft die eine Einrichtung relativ in Seitenrichtung gestellt werden. Diese Anordnung hat den Vorteil, dass man durch Verwendung einer einzigen Messeinheit 26 und zweimaligem Ansetzen die Schwingungsfrequenzen an den Vorder- bzw. Hinterrädern nacheinander prüfen und die Stossdämpfer qualifizieren kann.

## Patentansprüche

1. Verfahren zum Qualifizieren von Stossdämpfern an mit elastischen Reifen versehenen, gefederten Fahrzeugen, vorzugsweise Strassenkraftfahrzeugen, bei dem in einem ersten Schritt das Rad des Fahrzeuges durch Sinus-Schwingungen von konstanter Amplitude erregt und auf eine über der Eigenfrequenz des Fahrwerkes gelegene Frequenz beschleunigt wird, und bei dem in einem zweiten Schritt die Erregerfrequenz vermindert wird, dadurch gekennzeichnet, dass die Änderungen der Rad-Sohlenkraft während des ersten Schritts gemessen werden und daraus ein Mittelwert elektrisch gebildet wird, und dass während des zweiten Schritts im Eigenfrequenzpunkt des Fahrwerkes die minimale Rad-Sohlenkraft gemessen wird und das Verhältnis dieses minimalen Wertes der Rad-Sohlenkraft mit dem Mittelwert der Rad-Sohlenkraft gebildet wird und der Stossdämpfer anhand dieses Verhältnisses qualifiziert wird.

2. Vorrichtung zum Durchführen des Verfahrens nach Anspruch 1, mit einer Radstütze (10) und einer mit dieser zusammenwirkenden Schwingeinheit (12), wobei die Radstütze (10) und die Schwingeinheit (12) über einen zweiarmigen Hebel (20) miteinander in Verbindung stehen, dadurch gekennzeichnet, dass dem Kippunkt (22) des Hebels (20) ein Kraftfühler (24) zur Messung der Rad-Sohlenkraft zugeordnet ist, der mit einer elektronischen Messeinheit (26) verbunden ist, die eine Einrichtung (42) zur Bildung des Mittelwertes der Rad-Sohlenkraft (P), eine Einrichtung (44, 46, 48) mit einem Speicherverhalten zur Ermittlung der minimalen Rad-Sohlenkraft und eine Vorrichtung (50) zur Bildung des Verhältnisses zwischen dem Mittelwert (56) der Rad-Sohlenkraft und dem Minimalwert (60) der Rad-Sohlenkraft aufweist.

## Claims

1. Method for qualifying shock absorbers on sprung vehicles, preferably power-driven road vehicles, provided with resilient tyres, in which in a first step the wheel of the vehicle is excited with sinusoidal oscillations of constant amplitude and is accelerated to a frequency lying above the characteristic frequency of the vehicle, and in which in a second step the exciting frequency is reduced, characterized in that the changes of the wheel grip are measured during the first step and an average value is electrically formed therefrom, and in that during the second step at the characteristic frequency point of the vehicle the minimum wheel grip is measured and the ratio of this minimum value of the wheel grip to the average value of the wheel grip is formed and the shock absorber is qualified on the basis of this ratio.

2. Device for carrying out the method according to claim 1 comprising a wheel support (10) and an oscillatory unit (12) cooperating with this support, the wheel support (10) and the oscillatory unit (12) being coupled together by a two-armed lever (20), characterized in that the fulcrum (22) of the lever (20) is provided with a force sensor (24) for measuring the wheel grip, which is coupled to an electronic measuring unit (26) which comprises an arrangement (42) for forming the average value of the wheel grip (P), and an arrangement (44, 46, 48) having a storage function for determining the minimum wheel grip and a device (50) for forming the ratio between the average value (56) of the wheel grip and the minimum value (60) of the wheel grip.

## Revendications

1. Procédé de vérification de fonctionnement d'amortisseurs sur des véhicules suspendus, pourvus de pneumatiques, de préférence des véhicules automobiles routiers, où dans une première étape la roue du véhicule est excitée par des oscillations sinusoïdales d'amplitude constante et est accélérée à une fréquence supérieure à la fréquence propre du train de roulement, et où dans une seconde étape, la fréquence d'excitation est réduite, caractérisé en ce que les variations de la force d'appui de roue sont mesurées pendant la première étape et une valeur moyenne est établie électriquement à partir de celles-ci, et en ce que, pendant la seconde étape, la force minimale d'appui de roue est mesurée au point de fréquence propre du train de roulement et le rapport entre cette valeur minimale de la force d'appui de roue et la valeur moyenne de la force d'appui de roue est établi et le fonctionnement de l'amortisseur est vérifié à l'aide de ce rapport.

2. Appareil pour la mise en œuvre du procédé selon la revendication 1, comportant un support de roue (10) et une unité d'oscillation (12) coopérant avec celui-ci, le support de roue (10) et l'unité d'oscillation (12) étant reliés entre eux par l'intermédiaire d'un levier (20) à deux bras, caractérisé en ce que le point de basculement (22) du levier (20) est associé à un capteur de force (24) pour la mesure de la force d'appui de roue, qui est relié à une unité électronique de mesure (26), qui comporte un dispositif (42) pour établir la valeur moyenne de la force d'appui de roue (P), un dispositif (44, 46, 48) à comportement de mémoire pour déterminer la force minimale d'appui de roue et un dispositif (50) pour établir le rapport entre la valeur moyenne (56) de la force d'appui de roue et la valeur minimale (60) de la force d'appui de roue.

0 049 303

Fig.1

Fig.2

Fig.3

7